(19) Europäisches Patentamt / European Patent Office / Office européen des brevets

(11) **EP 4 757 208 A1**

(12) **EUROPEAN PATENT APPLICATION**
published in accordance with Art. 153(4) EPC

(43) Date of publication:
**10.06.2026 Bulletin 2026/24**

(21) Application number: **24864553.3**

(22) Date of filing: **06.09.2024**

(51) International Patent Classification (IPC):
***H04B 10/079*** (2013.01)

(52) Cooperative Patent Classification (CPC):
**H04B 10/079; H04Q 11/00**

(86) International application number:
**PCT/CN2024/117557**

(87) International publication number:
**WO 2025/055833 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.09.2023  CN 202311201796**
**28.09.2023  CN 202311282851**

(71) Applicant: **HUAWEI TECHNOLOGIES CO., LTD.**
**Shenzhen 518129 (CN)**

(72) Inventors:
• **WU, Xuming**
**Shenzhen, Guangdong 518129 (CN)**
• **ZENG, Yan**
**Shenzhen, Guangdong 518129 (CN)**

(74) Representative: **Huawei European IPR**
**Huawei Technologies Duesseldorf GmbH**
**Riesstraße 25**
**80992 München (DE)**

(54) **TIME DELAY INSTRUCTION INFORMATION ALLOCATION METHOD, APPARATUS, AND SYSTEM**

(57)     Implementations of the present invention provide a method for allocating delay indication information. The method includes: An MFU obtains a round-trip delay RTD1 of a fiber line between a first SFU and the MFU in a registration phase of the first SFU; and obtains a round-trip delay RTD2 of a fiber line between a second SFU and the MFU in a registration phase of the second SFU. The MFU respectively specifies equalization delays EqD1 and EqD2 for the first SFU and the second SFU, where RTD1+EqD1=RTD2+EqD2, and a difference between EqD1 and EqD2 is not greater than 12 µs. The MFU sends EqD1 to the first SFU and EqD2 to the second SFU, and indicates the first SFU and the second SFU to delay transmission of a response message by EqD1 and EqD2 respectively. Implementations of the present invention further provide an apparatus and a system. According to implementations of the present invention, the MFU can receive the response message more quickly, thereby improving efficiency of processing information exchange between the MFU and the SFU.

FIG. 4

## Description

This application claims priority to Chinese Patent Application No. 202311201796.2, filed with the China National Intellectual Property Administration on September 15, 2023 and entitled "METHOD FOR ALLOCATING DELAY INDICATION INFORMATION, APPARATUS, AND SYSTEM", which is incorporated herein by reference in its entirety.

This application further claims priority to Chinese Patent Application No. 202311282851.5, filed with the China National Intellectual Property Administration on September 28, 2023 and entitled "DELAY INDICATION INFORMATION ALLOCATION METHOD, APPARATUS, AND SYSTEM", which is incorporated herein by reference in its entirety.

## TECHNICAL FIELD

The present invention relates to the field of network communication, and in particular, to a method for allocating delay indication information, an apparatus, and a system.

## BACKGROUND

Fiber to the room (fiber to the room, FTTR) is a new home network access architecture. In simple terms, a main gateway connected to an external network further extends fibers to a sub gateway in each room. The sub gateway provides a reliable wireless access point (access point, AP) for users, enabling wireless signal coverage in every corner of the house. However, the connection between the main gateway and the sub gateway traditionally is based on passive optical network (Passive Optical Network, PON) technology protocols. Because PON is a point-to-multipoint fiber transmission and access technology, fiber lengths to different connection points are not uniform, with maximum differences approaching 20 km. This leads to relatively high delay, which may not meet requirements of APs in FTTR scenarios.

## SUMMARY

In view of the foregoing problems in conventional technologies, implementations of the present invention provide a method for allocating delay indication information, an apparatus, and a system.

A specific implementation of the present invention provides a method for allocating delay indication information. The method includes: An MFU obtains a round-trip delay RTD1 of a fiber line between a first SFU and the MFU in a registration phase of the first SFU; and obtains a round-trip delay RTD2 of a fiber line between a second SFU and the MFU in a registration phase of the second SFU. The MFU respectively specifies equalization delays EqD1 and EqD2 for the first SFU and the second SFU, where RTD1+EqD1=RTD2+EqD2. This ensures that response messages of the first SFU and the second SFU can arrive at the MFU at the same time, where a difference between EqD1 and EqD2 needs to be not greater than 12 $\mu$s. The MFU sends EqD1 to the first SFU and EqD2 to the second SFU, and indicates the first SFU and the second SFU to delay transmission of the response message by EqD1 and EqD2 respectively.

In an optional embodiment, the difference between EqD1 and EqD2 is further not greater than 39 $\mu$s, or even not greater than 28 $\mu$s.

An implementation of the present invention further provides a transmission method. The method includes: A main fiber unit MFU sends an equalization delay EqD1 to a first sub fiber unit SFU, where EqD1 is specifically used to indicate the first SFU to delay transmission of a response message by the delay of EqD1 after starting to receive a data frame. The MFU starts, at a moment $T_0$, to send a first data frame to the first SFU through a first fiber line. The first SFU starts, at a moment $T_{srl}$, to receive the first data frame. The first SFU starts, at a moment ($T_{srl}$+EqD1), to send the response message. The MFU receives, at a moment $T_{mrl}$, the response message sent by the first SFU. The MFU completes sending the first data frame at a moment $T_f$, where $T_f$ is greater than or equal to $T_{mrl}$.

In an optional embodiment, that the first SFU starts, at the moment $T_{sr1l}$, to receive the first data frame means receiving a first bit of the first data frame at the moment $T_{srl}$.

In another optional embodiment, that the MFU starts, at the moment $T_0$, to send the first data frame means sending a first bit of the first data frame at the moment $T_0$.

In still another optional embodiment, the first data frame may be a superframe.

An implementation of the present invention further provides a network device, including a processor, a memory, a PON medium access control chip, and a transceiver. The memory is configured to store program code, and the processor collaborates with the memory 602, the PON MAC chip, and the transceiver to perform the method performed by the MFU.

An implementation of the present invention further provides a signal transmission system. The system includes the main fiber unit MFU and at least one sub fiber unit SFU.

It can be learned from the foregoing technical solutions that, the MFU can receive the response message more quickly, thereby improving efficiency of processing information exchange between the MFU and the SFU.

**BRIEF DESCRIPTION OF DRAWINGS**

FIG. 1 is a diagram of an architecture of a PON system according to conventional technologies;
FIG. 2 is a diagram of a principle of allocating an equalization delay according to conventional technologies;
FIG. 3 is a diagram of an architecture of an FTTR system according to an embodiment of the present invention;
FIG. 4 is a flowchart of a method for allocating delay indication information according to an implementation of the present invention;
FIG. 5 is a flowchart of a signal transmission method according to an implementation of the present invention; and
FIG. 6 is a diagram of a structure of a network device according to an implementation of the present invention.

**DESCRIPTION OF EMBODIMENTS**

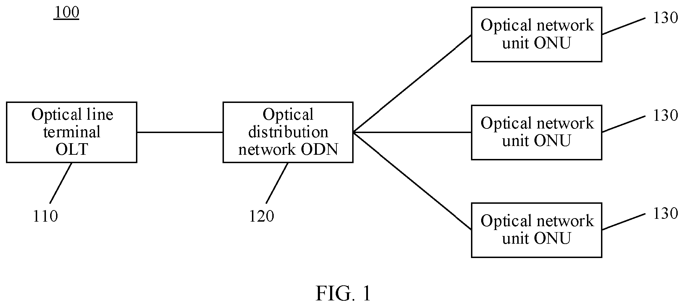

FIG. 1 is a diagram of an architecture of a PON system. As shown in FIG. 1, the PON system 100 includes at least one OLT 110, at least one ODN 120, and a plurality of ONUs 130. The OLT 110 provides a network-side interface for the PON system 100, and the ONU 130 provides a user-side interface for the PON system 100, and is connected to the ODN 120. If the ONU 130 directly provides a user port function, the ONU 130 is referred to as an optical network terminal (Optical Network Terminal, ONT). For ease of description, the ONUs 130 mentioned below collectively refer to the ONT that can directly provide the user port function and the ONU that can provide the user-side interface. The ODN 120 is a network consisting of fibers and a passive optical splitter, and is configured to connect the OLT 110 device and the ONU 130 device to distribute or multiplex data signals between the OLT 110 and the ONU 130.

In the PON system 100, a direction from the OLT 110 to the ONU 130 is defined as a downstream direction, and a direction from the ONU 130 to the OLT 110 is defined as an upstream direction. In the downstream direction, the OLT 110 broadcasts downstream data in a time division multiplexing (Time Division Multiplexing, TDM) mode to the plurality of ONUs 130 managed by the OLT 110, and each of the ONUs 130 receives only data that carries an identifier of the respective ONU 130. In the upstream direction, the plurality of ONUs 130 communicate with the OLT 110 in a time division multiple access (Time Division Multiple Access, TDMA) mode, and each of the ONUs 130 sends upstream data based on time domain resources allocated by the OLT 110 to the ONU 130. According to the foregoing mechanism, downstream optical signals sent by the OLT 110 are continuous optical signals, and upstream optical signals sent by the ONU 130 are burst optical signals.

For the OLT, logical distances from various ONUs to the OLT are not identical, hence transmission time of optical signals are different on fibers, and moments at which the optical signals arrive at the ONUs are different. In addition, a round-trip delay (Round-Trip Delay, RTD) between the OLT and the ONU also varies with time and environment. The RTD includes a transmission delay on a line, a data processing delay (also considered as a response delay) inside a device, and the like. To ensure that the upstream data sent by each ONU to the OLT is inserted into a specified slot without collisions and without excessive gaps after being converged on the ODN fiber, the OLT needs to accurately measure a distance between each ONU and the OLT through ranging (ranging), to control a moment at which each ONU sends the upstream data.

The technical concept of ranging is to make time from each ONU to the OLT is identical. Guided by this principle, GPON adopts a scheme that takes a farthest ONU as a reference, calculates a delay from the OLT to the ONU, and derives a precise distance between the OLT and the ONU. For an ONU closer to the OLT, a delay is added for the ONU, to synchronize time of arrival from the ONU to the OLT with time of arrival from the farthest ONU to the OLT. The purpose of adding the delay is to ensure that logical distances from all the ONUs to the OLT are equal. In other words, from the perspective of the OLT, transmission distances of all the ONUs are equal. The delay added for the ONU is referred to as an equalization delay, and the entire process is referred to as ranging.

When the ONU performs registration for a first time, the OLT initiates ranging to obtain a round-trip delay RTD of the ONU, calculates a physical distance of each ONU, and based on this physical distance of the ONU, specifies a proper equalization delay (Equalization Delay, EqD) parameter. In a ranging process, the OLT needs to open a window, that is, a quiet zone, temporarily pausing upstream sending channels of all other ONUs. By specifying EqD for the ONU, the OLT synchronizes data frames sent by the ONUs, to ensure that no conflict occurs on the optical splitter when the ONUs send data. This makes all the ONUs at a same logical distance and send data in corresponding slots, thereby avoiding collision of upstream signals. In practice, when selecting EqD, the OLT first determines time $T_{eqd}$ for all the ONUs to the OLT based on distances to a nearest ONU and the farthest ONU and maximum round-trip delay (RTD) of the ONU, and then obtains EqD on each line according to $EqD=T_{eqd}-RTD$. After the OLT calculates the equalization delay EqD and transfers the equalization delay EqD to the ONU, the selected value of EqD remains unchanged in a PON cycle.

GPON ranging is completed in an ONU registration phase. After receiving an SN request message sent by the OLT, the ONU returns an SN response message after waiting for specific response time. After receiving the response message and verifying that the response message is valid, the OLT allocates an ONU-ID to the ONU. After receiving the allocated ONU-ID, the ONU enters a ranging state.

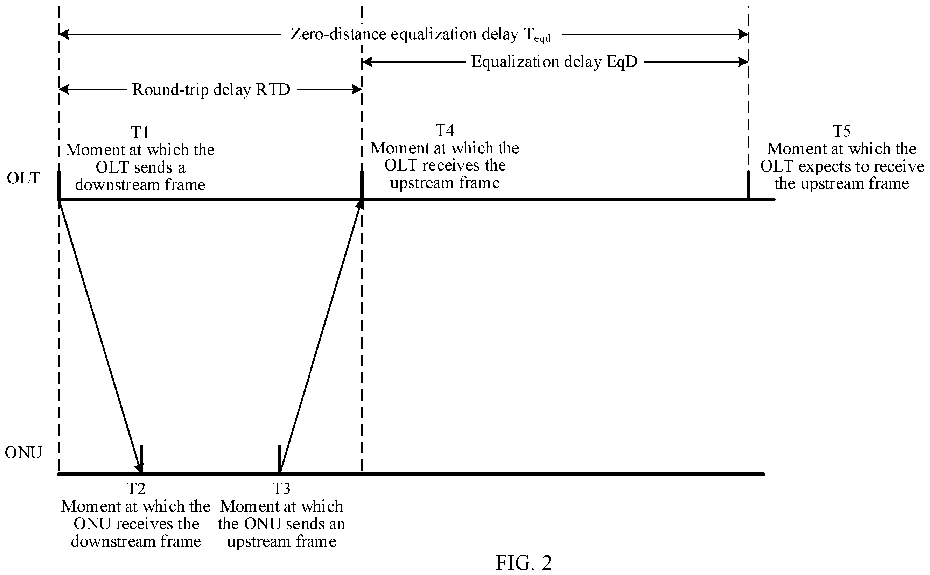

FIG. 2 shows a principle of calculating and allocating an equalization delay by an OLT. It is assumed that the OLT sends a ranging request to an ONU at a moment T1, commands all other ONUs to pause sending upstream services, and opens a ranging window in an upstream slot for the ONU to use. The ONU receives the ranging request at a moment T2 and processes the request internally. Then, the ONU sends, at a moment T3, an upstream frame that is in response to the ranging request. The OLT receives, at a moment T4, the upstream frame that is in response to the ranging request. Then, the OLT may obtain RTD of the ONU through calculation based on T4 and T1. The zero-distance equalization delay $T_{eqd}$ in FIG. 2 is a value set by the OLT based on a longest fiber length, and is greater than or equal to RTD of a logical farthest ONU. To ensure that upstream data phases of all ONUs connected to a same PON interface of the OLT are the same, the OLT allocates EqD to all the ONUs connected to the same PON interface of the OLT according to the following principle, where i indicates an ONU number.

$$EqD(i) = T_{eqd} - RTD(i) \text{ (Formula 1)}$$

After processing the request of the OLT, the ONU needs to wait for time of EqD before sending upstream data or upstream frames. This can ensure that the upstream data phases of all the ONUs connected to the same PON port of the OLT are the same.

Conventional PON systems are mainly used in fiber to the home (fiber to the home, FTTH) scenarios, and there is only one optical network unit for each home user. Based on FTTH, fibers may further be extended inside household rooms, to resolve a problem of poor Wi-Fi coverage in home networks. An ONU is installed in each room, so that a distance between a user terminal and the ONU is reduced, and signal quality is improved. Such an application scenario is referred to as fiber to the room (fiber to the room, FTTR).

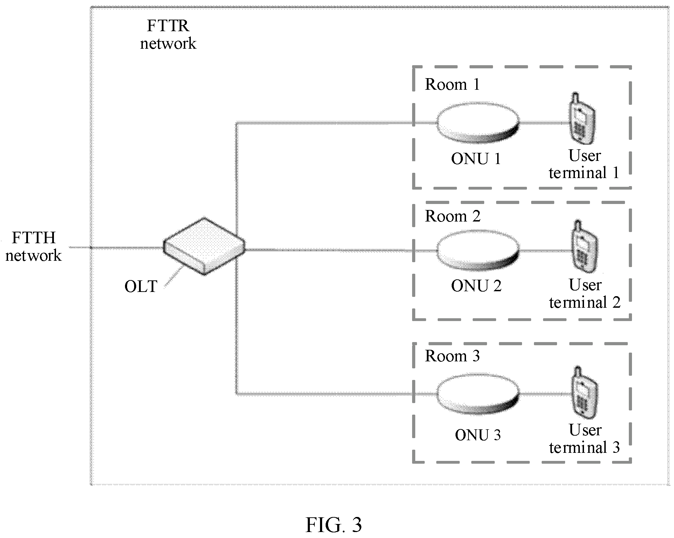

FIG. 3 is a diagram of an architecture of an FTTR system. An FTTR network and an FTTH network may be considered as two levels of PON systems. In a first-level PON system (FTTH), an OLT is deployed in a central office, and an ONU is deployed in an information box in a home. In a second-level PON system (FTTR), an OLT may be deployed in the information box in the home to replace the ONU in the FTTH. The OLT in the FTTR scenario has a function similar to that of the OLT in the FTTH scenario, and the OLT may also have a function similar to that of the ONU in the FTTH scenario. In other words, the OLT in FTTR may be used as a network device that serves as a connecting device between FTTH and FTTR. The ONU in FTTR may be deployed in each room in the home, and is configured to be connected to a user terminal. The ONU and the ONU in FTTH are essentially network devices of a same type. Differently, the ONU in FTTH is generally deployed in the information box, and there is usually an access point (access point, AP) between the ONU and the user terminal, while the ONU in FTTR is deployed in each room, and the ONU further has a function of the AP. In this case, the ONU may directly establish a Wi-Fi connection to the user terminal. It should be noted that the OLT in the second-level PON system (FTTR) may also be referred to as a "main gateway" or a "main fiber unit" (MFU), and the ONU may also be referred to as a "sub gateway" or a "sub fiber unit" (SFU). In addition, because the SFU serves as an access point AP to provide a Wi-Fi connection for a STA, the SFU is also referred to as an AP. Specific names of the foregoing devices are not limited in this application.

Because a maximum transmission distance between an OLT and an ONU in a conventional PON system may be up to 20 km, a difference in distances from different ONUs to the same OLT may be as great as 20 km. However, in FTTR scenarios, a residential house generally spans dozens of meters, with a maximum span over several hundred meters. Due to constraints of household layout, a maximum difference in distances between a plurality of SFUs disposed in the residential house to the same MFU is at most several hundred meters. The rule for selecting EqD in the conventional PON system is not necessarily applicable to the FTTR scenarios.

Based on this, the following formula is used:

$$T_{eqd} \geq RspTime_{max} + (L_{min} + D_{max})\frac{(n_{1577} + n_{1270})}{c} \text{ (Formula 2)}$$

For the FTTR network, a value of $L_{min}$ is set to 0 km, a value of $D_{max}$ is set to 1 km, and a value of $RspTime_{max}$ is set to 36 μs. Based on the calculation, a minimum value of $T_{eqd}$ may be 36 μs+10 μs=46 μs. In other words, after starting to send a signal, the OLT may start, at least 46 μs later, to receive a response signal of the ONU.

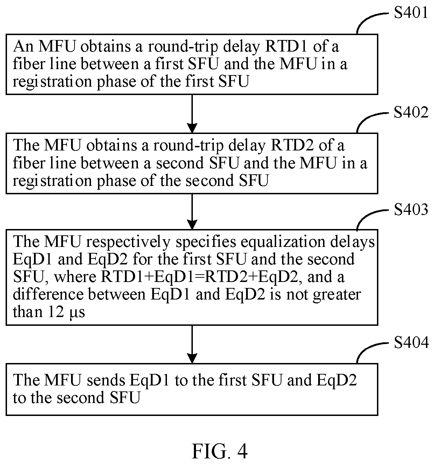

An embodiment of the present invention provides a method for allocating delay indication information, and the solution is applied to a fiber network. As shown in FIG. 4, the method includes the following steps.

Step 401: An MFU obtains a round-trip delay RTD1 of a fiber line between a first SFU and the MFU in a registration phase of the first SFU.

Step 402: The MFU obtains a round-trip delay RTD2 of a fiber line between a second SFU and the MFU in a registration phase of the second SFU.

Step 403: The MFU respectively specifies equalization delays EqD1 and EqD2 for the first SFU and the second SFU, where RTD1+EqD1=RTD2+EqD2, and a difference between EqD1 and EqD2 is not greater than 12 $\mu$s.

Specifically, it can be learned from RTD1+EqD1=RTD2+EqD2 that the difference between EqD1 and EqD2 is used to compensate for a difference between RTD1 and RTD2. RTD includes a transmission delay on the line and a data processing delay inside a device. From the foregoing analysis of the FTTR network cabling, a maximum difference between distances between one MFU and a plurality of SFUs connected to the MFU is several hundred meters, that is, a difference between lengths of fiber lines connecting the MFU to the plurality of SFUs is not greater than 1 km. Therefore, a maximum difference between transmission delays of different lengths of fibers is 10 $\mu$s. In addition, a difference between data processing by different devices is not large, and generally is not greater than 2 $\mu$s. Therefore, the difference between RTD1 and RTD2 is not greater than 12 $\mu$s, and the difference between EqD1 and EqD2 is not greater than 12 $\mu$s.

Step 404: The MFU sends EqD1 to the first SFU and EqD2 to the second SFU, indicates the first SFU to delay transmission of a response message by the delay of EqD1 after starting to receive a data frame sent by the MFU, and indicates the second SFU to delay transmission of a response message by EqD2 after starting to receive a data frame sent by the MFU.

In an optional implementation, a fiber length difference $D_{max}$ may be set to 0.5 km or 0.8 km, to obtain a corresponding minimum $T_{eqd}$ value of 28 $\mu$s or 39 $\mu$s. Similarly, in step 403, it may be further required that the difference between EqD1 and EqD2 be not greater than 7 $\mu$s or not greater than 10 $\mu$s.

According to the solution in this embodiment, after receiving the data frames sent by the MFU, the first SFU and the second SFU connected to the MFU delay transmission of the response message by EqD1 and EqD2 respectively. On the premise that the response messages arrive at the MFU at the same time, it can be ensured that EqD1 or EqD2 is as small as possible, thereby reducing a waiting delay of the first SFU or the second SFU. In this way, the MFU can receive the response message more quickly, thereby improving efficiency of processing information exchange between the MFU and the SFU. The difference between EqD1 and EqD2 being not greater than 12 $\mu$s is a technical point that is derived from specific analysis of FTTR networking characteristics, which identifies technical measures to improve processing efficiency of the fiber network, thereby meeting higher requirements of home Wi-Fi terminals or applications for response time in FTTR networking.

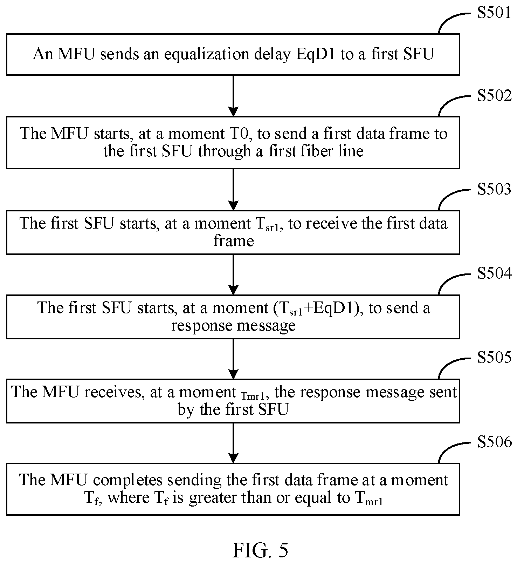

An embodiment of the present invention provides a signal transmission method, and this solution is applied to a fiber network. As shown in FIG. 5, the method includes the following steps.

Step 501: An MFU sends an equalization delay EqD1 to a first SFU. Specifically, EqD1 is used to indicate the first SFU to delay transmission of a response message by the delay of EqD1 after starting to receive a data frame.

Step 502: The MFU starts, at a moment $T_0$, to send a first data frame to the first SFU through a first fiber line.

Specifically, starting to send the first data frame means sending a first bit of the data frame, where the first data frame may be a superframe including a data payload and a frame header. Transmission duration of the superframe is fixed at 125 $\mu$s.

Step 503: The first SFU starts, at a moment $T_{srl}$, to receive the first data frame.

Specifically, starting to receive the first data frame means receiving the first bit of the data frame.

Step 504: The first SFU starts to send the response message at a moment $(T_{srl}+EqD1)$.

Specifically, starting to send the response message at the moment $(T_{srl}+EqD1)$ is equivalent to delaying transmission of a first bit of the response message by EqD1 after the first bit of the data frame is received.

Step 505: The MFU receives, at a moment $T_{mrl}$, the response message sent by the first SFU.

Step 506: The MFU completes sending the first data frame at a moment $T_f$, where $T_f$ is greater than or equal to $T_{mrl}$.

According to the method in this embodiment, because the fiber connecting the MFU to each SFU in FTTR scenarios is quite short, a total of EqD1 and a transmission delay on the fiber line on which the first SFU is located is always less than 125 $\mu$s, that is, less than the transmission duration of the superframe. Therefore, the MFU can receive feedback information of the SFU when sending the first data frame, in other words, the MFU can receive the response message sent by the first SFU before completing sending the first data frame at the moment $T_f$, so that efficiency of processing information exchange between the MFU and the SFU is higher.

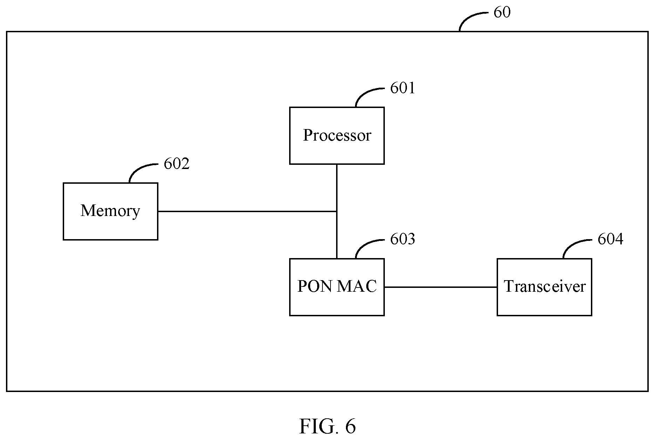

An embodiment of the present invention further provides a network device. The network device is the MFU shown in FIG. 6. As shown in FIG. 6, the network device 60 includes modules such as a processor 601, a memory 602, a PON medium access control (medium access control, MAC) chip 603, and a transceiver 604. The processor 601 may be a general-purpose central processing unit (Central Processing Unit, CPU), a microprocessor, an application-specific integrated circuit ASIC, or at least one integrated circuit, and is configured to execute a related program. Specifically, the processor 601 calculates and obtains RTD1 and RTD2 shown in FIG. 3, and obtains EqD1 and EqD2 based on RTD1 and RTD2. Further, the processor collaborates with the memory 602, the PON MAC chip 603, and the transceiver 604 to perform the method performed by the MFU in FIG. 3 or FIG. 4.

The memory 602 may be a read-only memory (Read-Only Memory, ROM), a static storage device, a dynamic storage device, or a random access memory (Random Access Memory, RAM). The memory 602 may store an operating system and another application program. When the technical solutions provided in embodiments of the present invention are implemented by using software or firmware, program code used for implementing the technical solutions provided in embodiments of the present invention is stored in the memory 602, and is executed by the processor 601.

The PON MAC chip 603 is responsible for forwarding PON user plane data under control of the processor 601. The PON MAC chip 603 may include a physical coding sublayer and a MAC control sublayer.

In an embodiment, the processor 601 may include the memory 602 inside. In another embodiment, the processor 601 and the memory 602 are of two independent structures.

The transceiver 604 may include an optical transmitter and/or an optical receiver. The optical transmitter may be configured to send an optical signal, and the optical receiver may be configured to receive an optical signal. The optical transmitter may be implemented by using a light-emitting device, for example, a gas laser, a solid state laser, a liquid laser, a semiconductor laser, or a directly modulated laser. The optical receiver may be implemented by using an optical detector, for example, a photodetector or a photodiode (such as an avalanche photodiode). The transceiver 604 may further include a digital-to-analog converter and an analog-to-digital converter. The MFU communicates with a downstream SFU and also an upstream OLT via the transceiver 604.

The present invention further provides an FTTR system. The system includes the MFU shown in FIG. 6 and at least one SFU, and a connection relationship thereof is shown in the FTTR network structure in FIG. 3. Details are not described herein again.

All or a part of the foregoing embodiments may be implemented by using software, hardware, firmware, or any combination thereof. When the software is used for the implementation, all or a part of the embodiments may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, a fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk (SSD)), or the like.

## Claims

1. A method for allocating delay indication information, comprising:

   obtaining, by a main fiber unit MFU, a round-trip delay RTD1 of a fiber line between a first sub fiber unit SFU and the MFU in a registration phase of the first SFU; and obtaining, by the MFU, a round-trip delay RTD2 of a fiber line between a second SFU and the MFU in a registration phase of the second SFU;
   respectively specifying, by the MFU, equalization delays EqD1 and EqD2 for the first SFU and the second SFU, wherein $RTD1+EqD1=RTD2+EqD2$, and a difference between EqD1 and EqD2 is not greater than 12 $\mu$s; and sending, by the MFU, EqD1 to the first SFU and EqD2 to the second SFU, indicating the first SFU to delay transmission of a response message by EqD1 after starting to receive a data frame sent by the MFU, and indicating the second SFU to delay transmission of a response message by EqD2 after starting to receive a data frame sent by the MFU.

2. The method according to claim 1, wherein the difference between EqD1 and EqD2 is further not greater than 10 $\mu$s.

3. The method according to claim 1, wherein the difference between EqD1 and EqD2 is further not greater than 7 $\mu$s.

4. A signal transmission method, comprising:

   sending, by a main fiber unit MFU, an equalization delay EqD1 to a first sub fiber unit SFU, wherein specifically, EqD1 is used to indicate the first SFU to delay transmission of a response message by the delay of EqD1 after starting to receive a data frame;
   starting, by the MFU at a moment $T_0$, to send a first data frame to the first SFU through a first fiber line;
   starting, by the first SFU at a moment $T_{srl}$, to receive the first data frame;

starting, by the first SFU at a moment ($T_{srl}$+EqD1), to send the response message;
receiving, by the MFU at a moment $T_{mrl}$, the response message sent by the first SFU; and
completing sending, by the MFU, the first data frame at a moment $T_f$, wherein $T_f$ is greater than or equal to $T_{mrl}$.

5. The method according to claim 4, wherein starting, by the first SFU at the moment $T_{srl}$, to receive the first data frame means receiving a first bit of the first data frame at the moment $T_{srl}$.

6. The method according to claim 4, wherein starting, by the MFU at the moment $T_0$, to send the first data frame means sending a first bit of the first data frame at the moment $T_0$.

7. The method according to any one of claims 4 to 6, wherein the first data frame is a superframe.

8. A network device, comprising a processor 601, a memory 602, a PON medium access control chip 603, and a transceiver 604, wherein the memory 602 is configured to store program code, and the processor collaborates with the memory 602, the PON MAC chip 603, and the transceiver 604 to perform the method performed by the MFU according to claim 1.

9. A signal transmission system, wherein the system comprises the main fiber unit MFU according to claim 8 and at least one sub fiber unit SFU.

100

Optical network
unit ONU — 130

Optical line
terminal
OLT ——— Optical
distribution
network ODN —— Optical network
unit ONU — 130

110        120        Optical network
unit ONU — 130

FIG. 1

FIG. 2

FIG. 3

An MFU obtains a round-trip delay RTD1 of a fiber line between a first SFU and the MFU in a registration phase of the first SFU — S401

The MFU obtains a round-trip delay RTD2 of a fiber line between a second SFU and the MFU in a registration phase of the second SFU — S402

The MFU respectively specifies equalization delays EqD1 and EqD2 for the first SFU and the second SFU, where RTD1+EqD1=RTD2+EqD2, and a difference between EqD1 and EqD2 is not greater than 12 μs — S403

The MFU sends EqD1 to the first SFU and EqD2 to the second SFU — S404

FIG. 4

An MFU sends an equalization delay EqD1 to a first SFU — S501

The MFU starts, at a moment T0, to send a first data frame to the first SFU through a first fiber line — S502

The first SFU starts, at a moment $T_{sr1}$, to receive the first data frame — S503

The first SFU starts, at a moment $(T_{sr1}+EqD1)$, to send a response message — S504

The MFU receives, at a moment $T_{mr1}$, the response message sent by the first SFU — S505

The MFU completes sending the first data frame at a moment $T_f$, where $T_f$ is greater than or equal to $T_{mr1}$ — S506

FIG. 5

FIG. 6

## INTERNATIONAL SEARCH REPORT

| International application No. |
|---|
| **PCT/CN2024/117557** |

| | |
|---|---|
| **A.** | **CLASSIFICATION OF SUBJECT MATTER** |
| | H04B10/079(2013.01)i |

According to International Patent Classification (IPC) or to both national classification and IPC

| | |
|---|---|
| **B.** | **FIELDS SEARCHED** |

Minimum documentation searched (classification system followed by classification symbols)

IPC:H04B,H04L,H04Q,H04J

Documentation searched other than minimum documentation to the extent that such documents are included in the fields searched

Electronic data base consulted during the international search (name of data base and, where practicable, search terms used)

3GPP, CJFD, CNTXT, ENTXTC, ENTXT: PON, GPON, 均衡, 时延, 延迟, 延时, MFU, OLT, ONU, SFU, us, eqd?, μs, 微秒, teqd?, 差, 主, 从, 光纤单元, 光线路终端, 帧, 响应, 回应

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | CN 114567827 A (HUAWEI TECHNOLOGIES CO., LTD.) 31 May 2022 (2022-05-31) description, paragraphs [0035]-[0085], and figures 1-4 | 1-9 |
| A | CN 108242953 A (ZTE CORP.) 03 July 2018 (2018-07-03) entire document | 1-9 |
| A | CN 111866627 A (XINHE SEMICONDUCTOR TECHNOLOGY (WUXI) CO., LTD.) 30 October 2020 (2020-10-30) entire document | 1-9 |
| A | CN 113055205 A (CHINA TELECOM CORP., LTD.) 29 June 2021 (2021-06-29) entire document | 1-9 |
| A | CN 116546351 A (ZTE CORP.) 04 August 2023 (2023-08-04) entire document | 1-9 |
| A | US 2014161436 A1 (INDUSTRIAL TECHNOLOGY RESEARCH INSTITUTE) 12 June 2014 (2014-06-12) entire document | 1-9 |

| ☐ Further documents are listed in the continuation of Box C. | ☑ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 December 2024** | **11 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/117557**

| Patent document cited in search report | | | Publication date (day/month/year) | Patent family member(s) | | | Publication date (day/month/year) |
|---|---|---|---|---|---|---|---|
| CN | 114567827 | A | 31 May 2022 | WO | 2022111045 | A1 | 02 June 2022 |
| CN | 108242953 | A | 03 July 2018 | WO | 2018121466 | A1 | 05 July 2018 |
| CN | 111866627 | A | 30 October 2020 | None | | | |
| CN | 113055205 | A | 29 June 2021 | None | | | |
| CN | 116546351 | A | 04 August 2023 | None | | | |
| US | 2014161436 | A1 | 12 June 2014 | TW | 201424283 | A | 16 June 2014 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311201796
- CN 202311282851